# EUROPEAN PATENT APPLICATION

(11) **EP 2 993 628 A1**
(43) Date of publication of application: **09.03.2016**
(21) Application number: 15183884.4
(22) Date of filing: 04.09.2015
(51) Int. Cl.: G06Q 10/00

(54) **METHOD OF SETTING TIME ZONE BASED ON LOCATION INFORMATION AND ELECTRONIC DEVICE FOR SUPPORTING SAME**

(30) Priority: 05.09.2014 KR 20140119303
(71) Applicant: Samsung Electronics Co., Ltd., Gyeonggi-do 16677 (KR)
(72) Inventor: HAN, Jonghyun, 16677 Gyeonggi-do (KR); KWON, Yanghee, 16677 Gyeonggi-do (KR); SEONG, Jinha, 16677 Gyeonggi-do (KR); KIM, Areum, 16677 Gyeonggi-do (KR)
(74) Representative: Jenkins, Richard Gavin

(57) **Abstract**

A method of setting a time zone based on location information is provided. The method includes receiving, by an electronic device including a processor, an input of location information on a schedule setting screen of the electronic device, acquiring and displaying time zone information related to the input location information, and storing a schedule item including the location information and the time zone information.

## Description

### TECHNICAL FIELD

The present disclosure relates to a method and an apparatus for setting time zone information based on location information.

### BACKGROUND

An electronic device provides a user with additional functions such as a schedule management function, a memo function, and the like. Particularly, the user may set a schedule (i.e. a schedule item or event) according to a standard time zone of a place where a user is located through a schedule management function.

Meanwhile, the user may move to another area or country from the current location for an overseas business trip or travel. In this case, the electronic device displays a different standard time zone depending on the area or country before the movement or after the movement. That is, the standard time zone may change as a standard meridian used in the area or country before or after the movement changes. Accordingly, when the user presets a schedule in another area or country, the user may input a place and a standard time zone according to the place in order to set the schedule based on the standard time zone of the corresponding place.

However, the user should input schedules after identifying corresponding places and standard time zones of the corresponding places which are different according to each area or country, which makes the user feel inconvenienced.

Further, the electronic device cannot identify an accurate time zone of a small city or a small country, so that it is difficult to identify and set the standard time zone. That is, the electronic device has a difficulty in identifying the standard time zone of the small city or the small country unless the small city or the small country is identified through a map search.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of setting a time zone based on location information and an electronic device for supporting the same.

An aspect of the present disclosure is to provide a method of automatically acquiring and changing standard time zone information through global positioning system (GPS) coordinate information included in input location information.

Another aspect of the present disclosure is to provide an electronic device that may infer a time zone for a given schedule item associated with a place and a time through a predetermined schedule context before and after the time for the given schedule and automatically set a standard time zone of the place to the inferred time zone, when the schedule is added. Further, when the schedule is added, the electronic device may calculate a distance spanned by the schedule context in a time interval before and after the added schedule and provide the closest standard time zone information.

In accordance with an aspect of the present disclosure, a method of setting a time zone based on location information is provided. The method includes receiving, by an electronic device including a processor, an input of location information on a schedule setting screen of the electronic device, acquiring and displaying time zone information related to the input location information, and storing a schedule including the location information and the time zone information.

In accordance with another aspect of the present disclosure, a method of setting a time zone based on location information is provided. The method includes determining, by an electronic device including a processor, whether a schedule related to a schedule to be registered is stored, when a schedule registration request is detected on a schedule setting screen of the electronic device, acquiring and displaying location information and time zone information of the related schedule, when the related schedule is stored, and storing the schedule to be registered including the location information and the time zone information.

In accordance with another aspect of the present disclosure, a method of setting a time zone based on location information is provided. The method includes displaying a schedule registration screen including location information, receiving a first input, receiving a location information related to a schedule item, when the first input corresponds to a time information related to the schedule item, wherein the first input as a time information of a current location is stored upon completing a schedule registration, and receiving a time information related to a schedule item after the first input, when the first input corresponds to a location information related to the schedule item, wherein the received time information as a time information of the inputted location is stored upon completing a schedule registration.

In accordance with another aspect of the present disclosure, an electronic device is provided. The electronic device includes a display unit configured to display a schedule setting screen including location information and time zone information, and a controller including a processor configured to acquire and display, when an input of the location information is received on the schedule setting screen, the time zone information related to the input location information and to store a schedule including the location information and the time zone information.

In accordance with another aspect of the present disclosure, an electronic device is provided. The electronic device includes a display unit configured to display a schedule setting screen including location information and time zone information, and a controller including a processor configured to determine whether a schedule related to a schedule to be registered is stored, when a schedule registration request is detected on the schedule setting screen, to acquire and display location information and time zone information of the related schedule, when the related schedule is stored, and to store the schedule to be registered including the location information and the time zone information.

In accordance with another aspect of the present disclosure, an electronic device is provided. The electronic device includes a display unit configured to display a schedule registration screen including location information, and a controller including a processor configured to receive a first input, and in response to the first input when the first input corresponds to a time information related to a schedule item, receive a location information related to the schedule item, wherein the first input as a time information of a current location is stored upon completing a schedule registration, and when the first input corresponds to a location information related to a schedule item, receive a time information related to the schedule item after the first input, wherein the received time information as a time information of the inputted location is stored upon completing a schedule registration.

A method of setting a time zone by using location information and an electronic device for supporting the same according to various embodiments of the present disclosure allow a user to quickly set schedules by automatically changing a standard time zone based on contexts of schedules. Further, the user can resolve the inconvenience in inputting a time zone through recommended time zone information close to the time when the schedule is added. The user can resolve the cumbersome procedure of inputting the standard time zone and the difficulty in setting the standard time zone through the inputting of location information alone by automatically setting standard time zone information related to the input location information.

Other aspects, advantages, and salient features of the disclosure will become apparent to those skilled in the art from the following detailed description, which, taken in conjunction with the annexed drawings, discloses various embodiments of the present disclosure.

Another aspect of the present disclosure provides a computer program comprising instructions arranged, when executed, to implement a method in accordance with any one of the above-described aspects. A further aspect provides machine-readable storage storing such a program.

Various respective aspects and features of the present disclosure are defined in the appended claims.

It is an aim of certain embodiments of the present disclosure to solve, mitigate or obviate, at least partly, at least one of the problems and/or disadvantages associated with the prior art. Certain embodiments aim to provide at least one of the advantages described below.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a configuration of an electronic device according to an embodiment of the present disclosure;
FIG. 2 is a flowchart illustrating a time zone setting method using location information according to an embodiment of the present disclosure;
FIGS. 3A, 3B, 3C, 3D, 4A, 4B, 4C and 4D illustrate a time zone setting method using location information according to various embodiments of the present disclosure;
FIG. 5 is a flowchart illustrating a time zone setting method using location information according to an embodiment of the present disclosure;
FIGS. 6A, 6B, 6C, 6D, 7A, 7B, 7C and 7D illustrate a time zone setting method using location information according to various embodiments of the present disclosure;
FIG. 8 is a flowchart illustrating a time zone setting method using location information according to an embodiment of the present disclosure;
FIGS. 9A, 9B, 9C, 10A, 10B and 10C illustrate a time zone setting method using location information according to various embodiments of the present disclosure;
FIG. 11 is a flowchart illustrating a time zone setting method using location information according to an embodiment of the present disclosure;
FIGS. 12A, 12B and 12C illustrate a time zone setting method using location information according to various embodiments of the present disclosure; and
FIG. 13 is a flowchart illustrating a method of providing a notification to a user by using location information according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces. In particular, where the indefinite article is used, the specification is to be understood as contemplating plurality as well as singularity, unless the context requires otherwise.

In the present disclosure, the expressions "include" and "may include" refer to an existence of a corresponding function, operation, or element, and do not limit one or more additional functions, operations, or elements. In the description, it should be understood that the terms "include" and "have" indicate an existence of a feature, a number, an operation, a structural element, parts, or a combination thereof, and do not previously exclude the existences or probability of addition of one or more another features, numeral, operations, structural elements, parts, or combinations thereof.

In the present disclosure, the expression "or" includes any or all combinations of words enumerated together. For example, the expression "A or B" may include A, may include B, or may include both A and B.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present specification.

Hereinafter, an electronic device according to various embodiments of the present disclosure will be described with reference to the accompanying drawings. The term "user" as used in various embodiments of the present disclosure may indicate a person who uses an electronic device or a device (e.g., artificial intelligence electronic device) that uses an electronic device.

In accordance with an embodiment, the electronic device may include at least one of a smart phone, a tablet personal computer (PC), a mobile phone, a video phone, an e-book reader, a desktop PC, a laptop PC, a netbook computer, a personal digital assistant (PDA), a portable multimedia player (PMP), a moving picture experts group phase 1 or phase 2 (MPEG-1 or MPEG-2) audio layer 3 (MP3) player, a mobile medical device, a camera, a wearable device (e.g. a head-mounted-device (HMD) such as electronic glasses), electronic clothes, an electronic bracelet, an electronic necklace, an electronic appcessory, an electronic tattoo, and a smart watch.

Location information according to an embodiment of the present disclosure may refer to coordinate information including information on latitude, longitude, and altitude. Further, time zone information according to an embodiment of the present disclosure refers to a standard time zone corresponding to the location information. The time zone information may be received from an external electronic device or a server through a communication unit or acquired through time zone information that matches the location information stored in the electronic device. According to an embodiment of the present disclosure, the electronic device may automatically extract and display time zone information according to an input of location information into a schedule setting screen.

According to an embodiment of the present disclosure, the electronic device may operate based on a first time zone. At this time, the electronic device may register, at the location of the first time zone, a schedule to be conducted at another location. The electronic device may acquire and display second time zone information on the other location by inputting the other location into the schedule setting screen. When the electronic device sets the schedule based on the second time zone information, the schedule may be stored with converted time zone information at the first time zone location. The term "schedule" is used throughout the present disclosure to refer to a representation of one or more time-based items or events in a calendar function, schedule management function, a memo function etc; where used herein, the terms "schedule item" and "event" are coterminous with the term "schedule". It is noted that the term "schedule" includes calendar items having a single time point (or in the case of "all-day" events, a single calendar date), calendar events spanning a period of time having an start and an end time (expressed in units of minutes, hours and/or days), and a grouping of one or more related events (i.e. a schedule of events) such as a might be arranged for an overseas business trip.

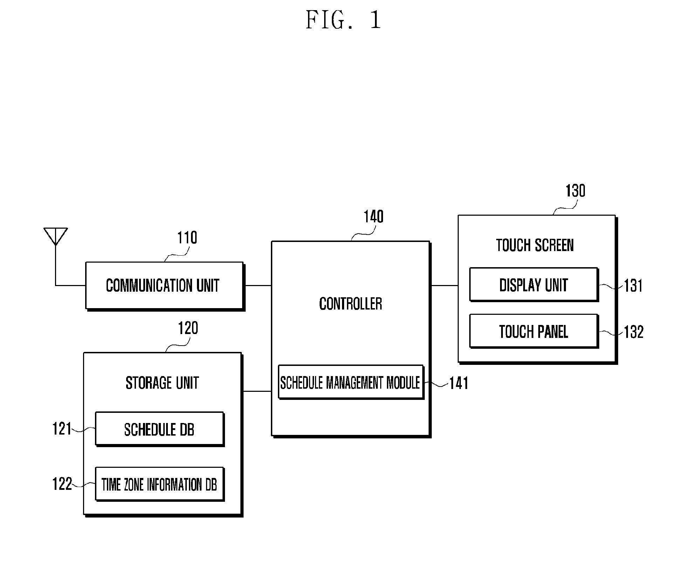

FIGS. 1 through 13, discussed below, and the various embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the present disclosure. Terms first, second, and the like are used to differentiate between objects having the same terminology and are in no way intended to represent a chronological order, unless where explicitly stated otherwise. A set is defined as a non-empty set including at least one element.

FIG. 1 illustrates a configuration of an electronic device according to an embodiment of the present disclosure.

Referring to FIG. 1, an electronic device according to the present disclosure is illustrated, where the electronic device may include a communication unit 110, a storage unit 120, a touch screen 130, and a controller 140.

The communication unit 110 performs a voice call, a video call, or data communication with an external electronic device through a network. The communication unit 110 may include a radio frequency (RF) transmitter that up-converts and amplifies the frequency of a transmitted signal, and an RF receiver that low-noise amplifies a received signal and down-converts the frequency of the received signal. Further, the communication unit 110 may include a modulator and a demodulator. The modulator and the demodulator may include code division multiple access (CDMA), wideband CDMA (WCDMA), long term evolution (LTE), Wi-Fi, a wireless broadband (WiBro), Bluetooth, and near field communication (NFC). The communication unit 110 may be a mobile communication module, an Internet communication module and/or a short range communication module.

Particularly, according to an embodiment of the present disclosure, the communication unit 110 may receive time zone information related to location information from a connected external electronic device or server under a control of the controller 140.

The storage unit 120 may include a program memory for storing an operating program of the electronic device and a data memory for storing data generated during execution of a program.

Particularly, according to an embodiment of the present disclosure, the storage unit 120 may include a schedule database (DB) 121 and a time zone information DB 122.

The schedule DB 121 may refer to a set of pieces of schedule information input according to a schedule setting request. The schedule DB 121 may include a schedule name, location information, time zone information related to the location information, and schedule notifying information.

The time zone information DB 122 may refer to a set of pieces of time zone information related to the location information. Time zone information on a location coordinate may be acquired using the time zone information DB 122.

The touch screen 130 may include a display unit 131 and a touch panel 132 which are integrally implemented. The display unit 131 may display various screens according to the use of the electronic device under a control of the controller 140. Further, the display unit 131 may include a liquid crystal display (LCD), a light emitting diode (LED) display, an organic LED (OLED) display, a micro electro mechanical system (MEMS) display, or an electronic paper display. The display unit 131 may display various types of contents (for example, texts, images, videos, icons, or symbols) for the user. The touch panel 132 may receive a touch input, a gesture input, a proximity input, or a hovering input using, for example, an electronic pen or a user's body part.

Particularly, according to an embodiment of the present disclosure, the display unit 131 may display a schedule setting screen which does not include time zone information under a control of the controller 140. When a location information input is detected in the schedule setting screen which does not include the time zone information under the control of the controller 140, the display unit 131 may acquire and display time zone information related to the location information. Alternatively, the display unit 131 may display a schedule setting screen including first time zone information under a control of the controller 140. When the location information input is detected under the control of the controller 140, the display unit 131 may acquire second time zone information related to the location information and display the second time zone information instead of the first time zone information. That is, the display unit 131 may switch from first time zone information to the second time zone information and display the second time zone information under the control of the controller 140.

The controller 140 controls the overall operation of the electronic device and signal flow between internal components of the electronic device, processes data, and controls power supply from a battery to the components.

Particularly, according to an embodiment of the present disclosure, the controller 140 may include a schedule management module 141.

According to an embodiment of the present disclosure, the schedule management module 141 may receive a location information input on the schedule setting screen into which time zone information is not input. When the location information input is received, the schedule management module 141 may automatically acquire time zone information related to the input location information and display the location information and the time zone information on the schedule setting screen. Further, the schedule management module 141 may store the schedule including the location information and the time zone information.

According to another embodiment of the present disclosure, the schedule management module 141 may display the schedule setting screen including first time zone information. When the location information input is received, the schedule management module 141 may acquire second time zone information related to the input location information. The schedule management module 141 may determine whether the first time zone information and the second time zone information match each other.

When the first time zone information and the second time zone information match each other, the schedule management module 141 may store the schedule including the location information and the first time zone information. In contrast, when the first time zone information and the second time zone information do not match each other, the schedule management module 141 may display the second time zone information on the schedule setting screen instead of the first time zone information. The schedule management module 141 may store the schedule including the location information and the second time zone information.

According to another embodiment of the present disclosure, when a schedule registration request is detected, the schedule management module 141 may determine whether a schedule (for example, a schedule including the date or a schedule before and after the date) stored based on the date on which the schedule registration request is detected exists. For example, the schedule may last all day for several consecutive days (for example, one schedule may last for two or more days) based on a 24-hour day. When the stored schedule exists, the schedule management module 141 may acquire location information and time zone information set to the schedule. The schedule management module 141 may display the acquired location information and time zone information on the schedule setting screen. The schedule management module 141 may store the schedule including the acquired location information and time zone information.

According to another embodiment of the present disclosure, the schedule management module 141 may receive a time information input on the schedule setting screen. The time information may refer to a start time and an end time of the schedule. The schedule management module 141 may determine whether a schedule stored at a time around the input time information exists. At this time, the stored schedule may be a schedule set in the unit of hours (for example, schedule set from 08:00 to 10:00). When the stored schedule exists, the schedule management module 141 may calculate a time difference between time information of the stored schedule and the input time information. The schedule management module 141 may acquire location information of a movable range from the location information of the stored schedule based on the calculated time difference (i.e. location information for a plurality of locations within potential travelling distance of the location of the stored schedule). The schedule management module 141 may extract and display recommended time zone information related to the location information of the movable range. When an input for selecting the displayed recommended time zone information is detected, the schedule management module 141 may display the selected time information on the schedule setting screen. The schedule management module 141 may store the schedule including the location information and the time zone information.

According to another embodiment of the present disclosure, the schedule management module 141 may acquire a current location of the electronic device. The schedule management module 141 may identify time zone information related to the current location of the electronic device to determine whether the identified time zone information and time zone information of a preset schedule match each other. Further, the schedule management module 141 may determine whether current location information of the electronic device and the location information of the preset schedule match each other.

When the identified time zone information and the time zone information of the preset schedule match each other and the current location information of the electronic device and the location information of the present schedule match each other, the schedule management module 141 may output a notification at an alarm time set to the schedule. When the identified time zone information and the time zone information of the preset schedule do not match each other or the current location information of the electronic device and the location information of the present schedule do not match each other, the schedule management module 141 may calculate a time taken to travel between the current location and the location information of the preset schedule, and output a notification before the alarm time set to the schedule based on the calculated travel time.

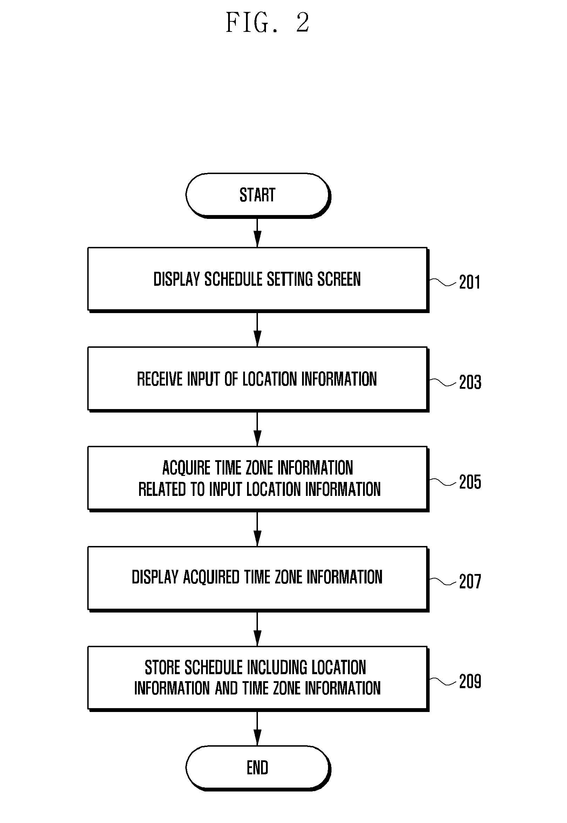

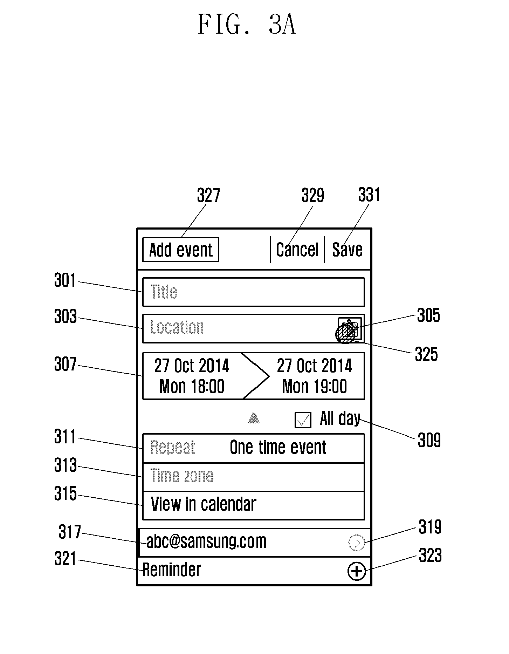

FIG. 2 is a flowchart illustrating a time zone setting method using location information according to an embodiment of the present disclosure. Further, FIGS. 3A to 4D illustrate a time zone setting method using location information according to various embodiments of the present disclosure.

Referring to FIG. 2, a flowchart illustrating a time zone setting method is illustrated, such that according to the time zone setting method the controller 140, as illustrated in FIG. 1, may display a schedule setting screen in operation 201. The schedule setting screen may be a screen displayed by an execution of an application for schedule registration such as a schedule application, a memo application, and a diary application. According to an embodiment of the present disclosure, it is assumed that the schedule setting screen is displayed through the schedule application.

The schedule setting screen may not display location information and time zone information. For example, as illustrated in FIG. 3A, the controller 140, as illustrated in FIG. 1, may display the schedule setting screen. More specifically, the schedule setting screen (in FIG. 3A) may include a schedule name input area 301, a location information input area 303, a map tab 305, a schedule time information setting area 307, an all-day checkbox 309, a schedule repetition setting tab 311, a standard time zone setting area 313, a calendar view tab 315, an account tab 317, an account view tab 319, reminder 321, a reminder addition tab 323, a schedule addition tab 327, a cancel tab 329 and a save tab 331. However, the present disclosure is not limited to this. As described above, the location information input area 303 and the standard time zone setting area 313 may be empty areas in which no information is displayed.

Referring back to FIG. 2, the controller 140 may receive an input of location information on the schedule setting screen in operation 203. According to an embodiment of the present disclosure, a method of receiving the input of the location information may include at least one of the map tab 305 as illustrated in FIG. 3A, an input through the location information input area 303 as illustrated in FIG. 3A, and a selection of the location information stored based on a previous input.

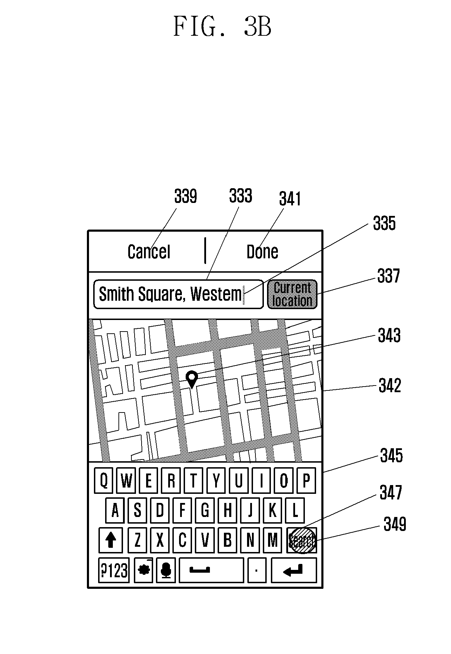

For example, referring to FIG. 3A, the controller 140 may detect a touch input 325 in the map tab 305 on the schedule setting screen. The controller 140 may display the screen as illustrated in FIG. 3B in response to the touch input 325. The screen of FIG. 3B may include a location information input area 333 through which location information can be input, a current location tab 337, a map screen 342, a current location information 343, a keypad 345, a search key 347, a cancel tab 339, and a done tab 341.

Further, the controller 140 may receive an input 335 of location information "Smith Square, Western, London" in the location information input area 333 by using the keypad 345. The controller 140 may input the location information "Smith Square, Western, London" 335 and detect a touch input 349 on the search key 347.

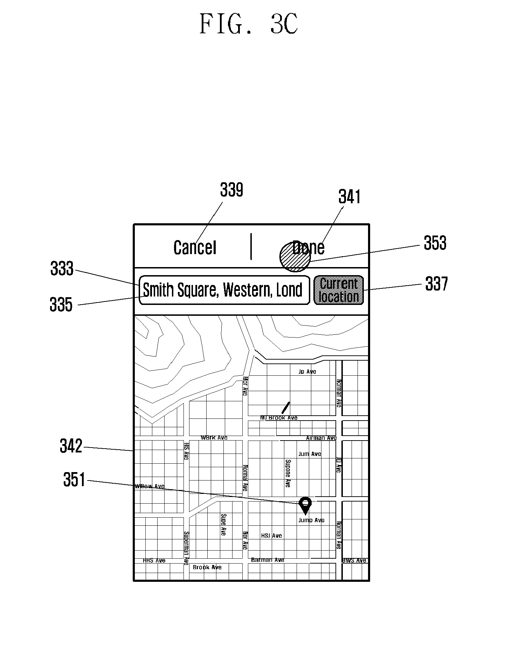

As illustrated in FIG. 3C, the controller 140 may display location information 351 corresponding to the location information "Smith Square, Western, London" 335 input into the location information input area 333 on the map screen 342 in response to the touch input 349 detected on the search key 347.

Referring back to FIG. 2, the controller 140 may acquire time zone information related to the input location information in operation 205. The controller 140 may receive time zone information corresponding to the location information from an external electronic device or a server through the communication unit 110, as illustrated in FIG. 1, or acquire the time zone information from the time zone information DB 122, as illustrated in FIG. 1, of the storage unit 120, as illustrated in FIG. 1. At this time, when the input location information corresponds to a city, the controller 140 may identify time zone information of the corresponding city and then display the time zone information.

When the input location information does not correspond to a city, the controller 140 may receive time zone information that matches a corresponding coordinate from the external electronic device or the server through the communication unit 110 or acquire the time zone information from the time zone information DB 122 of the storage unit 120 as described above, to automatically set the time zone information. For example, referring to FIG. 3C, when a touch input 353 is detected on the done tab 341, the controller 140 may acquire time zone information related to the location information "Smith Square, Western, London". That is, the controller 140 may acquire time zone information "(GMT-07:00) Pacific Time" related to the location information "Smith Square, Western, London" 335.

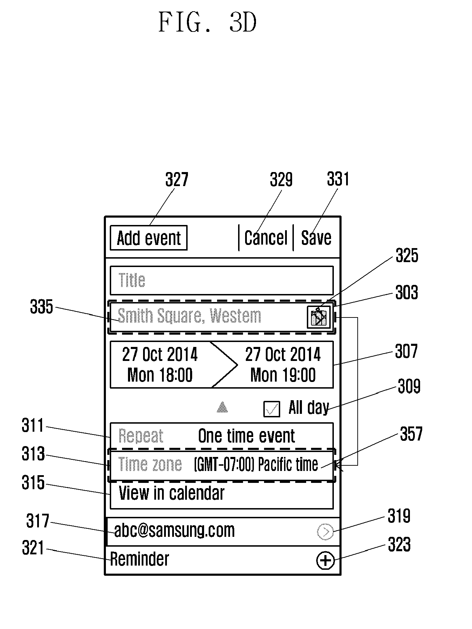

Referring to FIG. 2, the controller 140 may display the acquired time zone information in operation 207. For example, as illustrated in FIG 3D, the controller 140 may display the location information "Smith Square, Western, London" 335 in the location information input area 303 of the schedule setting screen and display the time zone information "(GMT-07:00) Pacific Time" 357 related to the location information 335 in the standard time zone input area 313. At this time, the schedule time information setting area 307 may show time information according to the time zone information "(GMT-07:00) Pacific Time" 357. In other words, the controller 140 may apply the time zone information "(GMT-07:00) Pacific Time" 357 to set a schedule based on the time zone information.

According to an embodiment of the present disclosure, the controller 140 may simultaneously perform operation 205 and operation 207. In other words, when an input of the location information is detected, the controller 140 may automatically acquire time zone information related to the location information and simultaneously display the location information and the time zone information on the schedule setting screen.

Referring to FIG. 2, the controller 140 may store the schedule including the location information and the time zone information in operation 209. For example, when a touch input is detected on the save tab 331, the controller 140 may store the schedule including the location information 335 and the time zone information 357. At this time, when an input of another area is detected, the controller 140 may also store information in other area as well as the location information 335 and the standard time zone information 357.

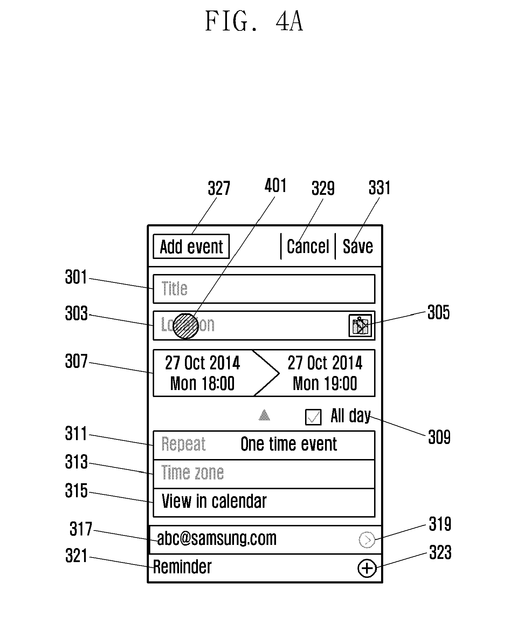

According to another embodiment of FIG. 2 with reference to FIGS. 4A to 4D, the controller 140, as illustrated in FIG. 1, may display a schedule setting screen as illustrated in FIG. 4A.

Since the schedule setting screen has been described in FIGS. 3A to 3D, redundant descriptions thereof will be omitted. At this time, the schedule setting screen (in FIG. 4A) may be in a state where the location information and the time zone information are not input into the location information input area 303 and the standard time zone input information 313. The controller 140 may detect a touch input 401 in the location information input area 303 on the schedule setting screen (in FIG. 4A).

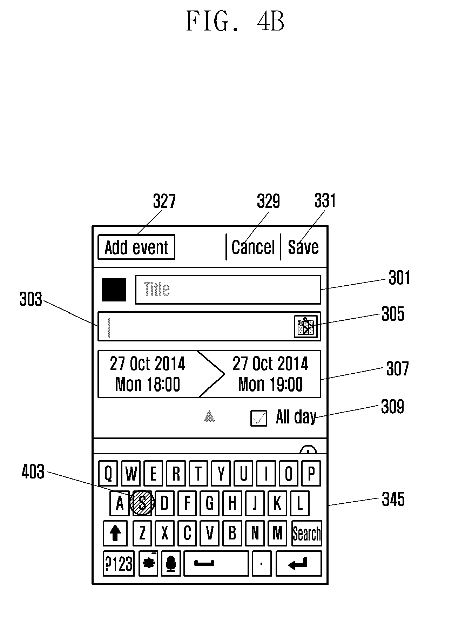

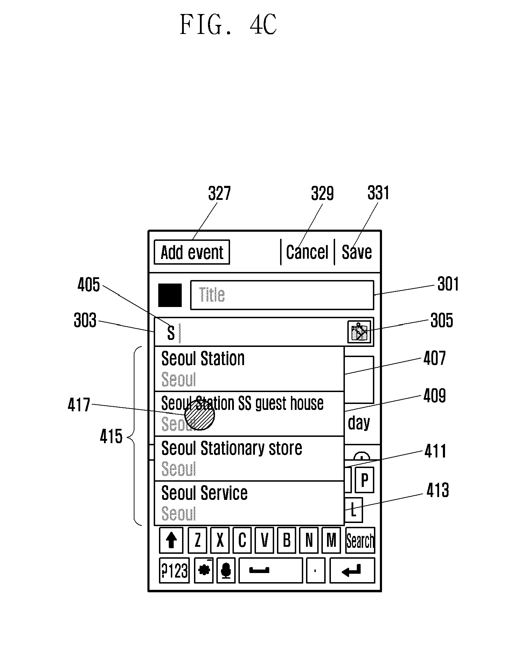

In response to the touch input, the controller 140 may display the keypad 345 as illustrated in FIG. 4B. The controller 140 may input location information into the location information input area 303 by using the keypad 345. More specifically, the controller 140 may detect a touch input 403 on "S" of the keypad 345. In response to the touch input 403 on "S", the controller 140 may display "S" 405 in the location information input area 303 as illustrated in FIG. 4C.

Further, the controller 140 may extract location information including "S" through the predictive text and display recommended location information 415 including information 407, 409, 411 and 413. When a touch input 417 of "Seoul Station SS guest house" 409 among the recommended location information 415 is detected, the controller 140 may acquire time zone information related to "Seoul Station SS guest house" 409. That is, the controller 140 may acquire time zone information "(GMT+09:00) Seoul" related to "Seoul Station SS guest house" 409.

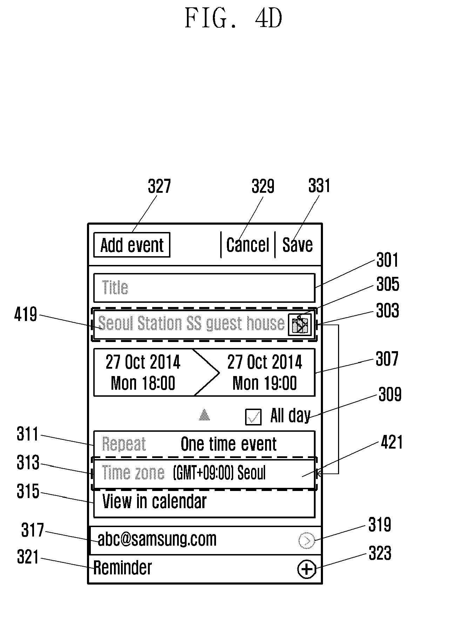

The controller 140 may display "Seoul Station SS guest house" 419 in the location information input area 303 and display the time zone information "(GMT+09:00) Seoul" 421 related to the acquired information "Seoul Station SS guest house" 419 in the standard time zone input area 313 as illustrated in FIG. 4D.

That is, referring to FIGS. 2 to 4D, when location information is input based on a location information search through a map or an input through a location information input area on the schedule setting screen in a state where location information and time zone information are not displayed, the controller 140 may acquire and display time zone information related to the location information. In other words, the controller 140 may automatically acquire and display time zone information through an input of the location information alone.

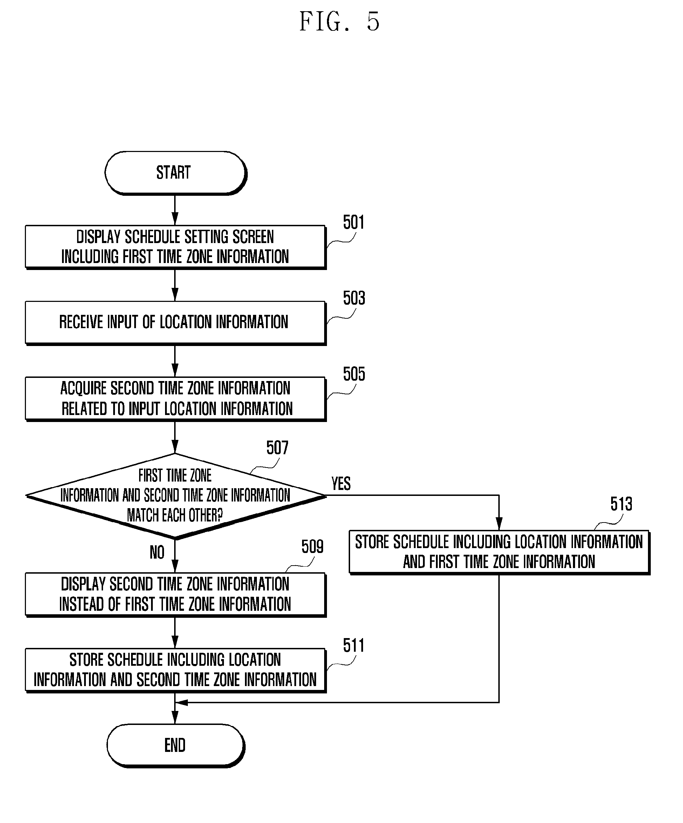

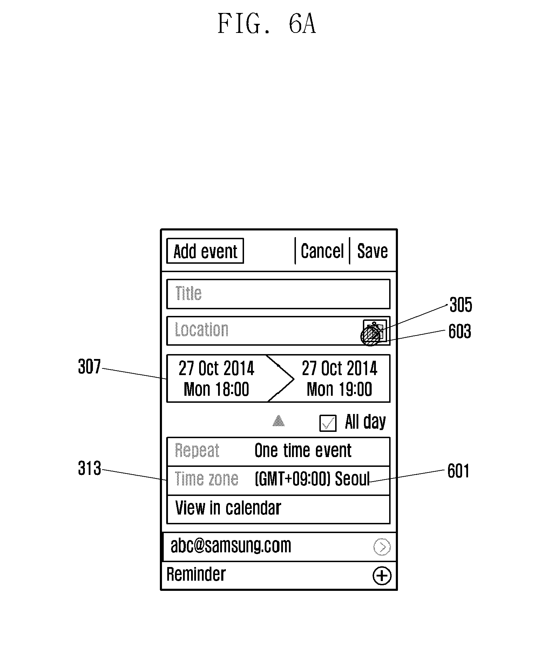

FIG. 5 is a flowchart illustrating a time zone setting method using location information according to an embodiment of the present disclosure. Further, FIGS. 6A to 7D illustrate a time zone setting method using location information according to various embodiments of the present disclosure. Regarding FIGS. 6A to 7D, since the schedule setting screen has been described in FIGS. 3A to 3D, redundant descriptions thereof will be omitted.

Referring to FIG. 5, a flowchart illustrating a time zone setting method is illustrated, such that according to the time zone setting method the controller 140, as illustrated in FIG. 1, may display a schedule setting screen including first time zone information in operation 501. The first time zone information may be first time zone information set to the electronic device by default or time zone information at the current position received through a GPS receiver (not shown). For example, as illustrated in FIG. 6A, the controller 140 may display the schedule setting screen including time zone information set by the default or first time zone information "(GMT+09:00) Seoul" 601 at the current position received through the GPS receiver (not shown) in the standard time zone input area 313.

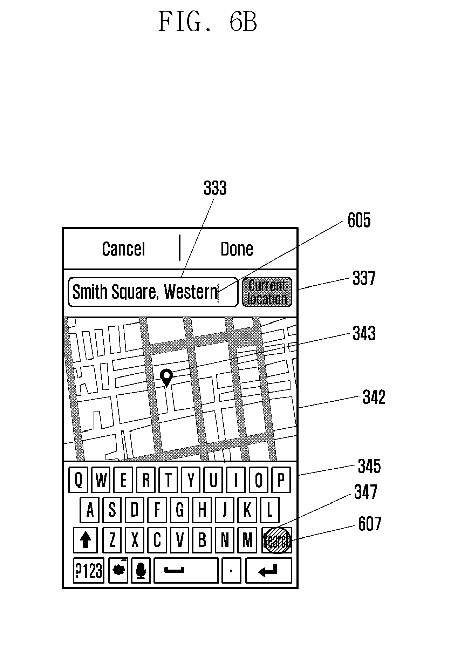

The controller 140 may receive an input of location information on the schedule setting screen in operation 503. For example, the controller 140 may detect a touch input 603 in the map tab 305 as illustrated in FIG. 6A. The controller 140 may display the screen as illustrated in FIG. 6B in response to the touch input 603. The screen of FIG. 6B may include the location information input area 333 through which location information can be input, the current location tab 337, the map screen 342, the current location information 343, the keypad 345, and the search key 347. Further, the controller 140 may receive an input 605 of location information "Smith Square, Western, London" in the location information input area 333 by using the keypad 345. The controller 140 may detect the touch input 607 on the search key 347 and search for the input location information "Smith Square, Western, London" 605.

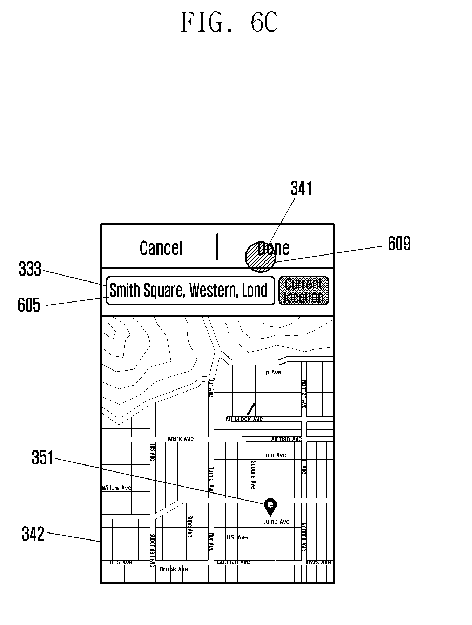

As illustrated in FIG. 6C, the controller 140 may display the location coordinate 351 corresponding to the location information "Smith Square, Western, London" 605 input into the location information input area 333 on the map screen 342 in response to the touch input 607 detected on the search key 347.

The controller 140 may acquire second time zone information related to the input location information in operation 505. For example, when a touch input 609 is detected on the done tab 341, the controller 140 may acquire second time zone information related to the location information "Smith Square, Western, London" 605. The second time zone information corresponding to the location information "Smith Square, Western, London" 605 may be "(GMT-07:00) Pacific Time".

The controller 140 may determine whether the first time zone information and the second time zone information match each other in operation 507. Operation 507 may be an operation for determining whether the first time zone information and the second time zone information, that is the standard time zone, match each other or whether location information corresponding to the first time zone information and location information corresponding to the second time zone information match each other. The operation considers that the corresponding locations may be different even though pieces of the time zone information are the same. When at least one of the two configurations is not satisfied, the controller 140 may determine that the first time zone information and the second time zone information do not match each other.

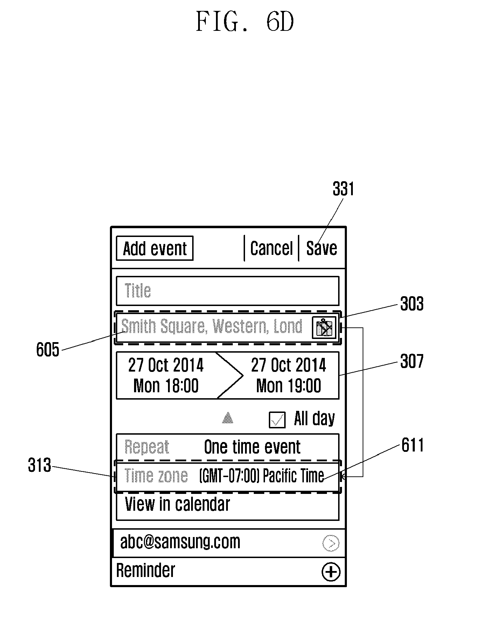

For example, referring to FIG. 6D, it may be determined whether the first time zone information "(GMT+09:00) Seoul" 601 displayed in the standard time zone input area 313 and the second time zone information "(GMT-07:00) Pacific Time" 611 corresponding to the location information "Smith Square, Western, London" 605 match each other. According to an embodiment of the present disclosure, it may be identified that the first time zone information "(GMT+09:00) Seoul" 601 and the second time zone information "(GMT-07:00) Pacific Time" 611 do not match each other.

When the first time zone information and the second time zone information do not match, the controller 140 may display the second time information in the standard time zone input area 313 instead of the first time zone information in operation 509. For example, the controller 140 may display the location information "Smith Square, Western, London" 605 in the location information input area 303 and display the time zone information "(GMT-07:00) Pacific Time" 611 in the standard time zone input area 313 as illustrated in FIG. 6D. That is, the first time zone information displayed in the standard time zone input area 313 as illustrated in FIG. 6A switches to the second time zone information as illustrated in FIG. 6D. At this time, the schedule time information setting area 307 may show time information according to the time zone information "(GMT-07:00) Pacific Time" 611. In other words, FIG. 6A illustrates time information to which the first time zone information "(GMT+09:00) Seoul" 601 is applied. However, referring to FIG. 6D, the second time zone information is acquired and time information to which the second time zone information "(GMT-07:00) Pacific Time" 611 is applied is illustrated.

The controller 140 may store the schedule including the location information and the second time zone information in operation 511. For example, when a touch input is detected on the save tab 331, the controller 140 may store the location information "Smith Square, Western, London" 605 and the time zone information "(GMT+07:00) Pacific Time" 611.

In contrast, when the first time zone information and the second time zone information match each other in operation 507, the controller 140 may store the schedule including the location information and the first time zone information in operation 513. In other words, when the first time zone information and the second time zone information match each other, the controller 140 may maintain the state in which the first time zone information "(GMT+09:00) Seoul" 601 is displayed in the standard time zone input area 313. That is, the state may correspond to a state in which the first time zone information and the second time zone information match each other and the location information of the first time zone information and the location information of the second time zone information match each other.

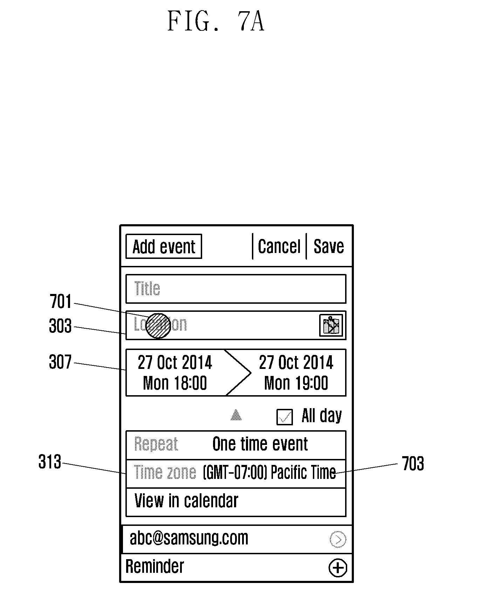

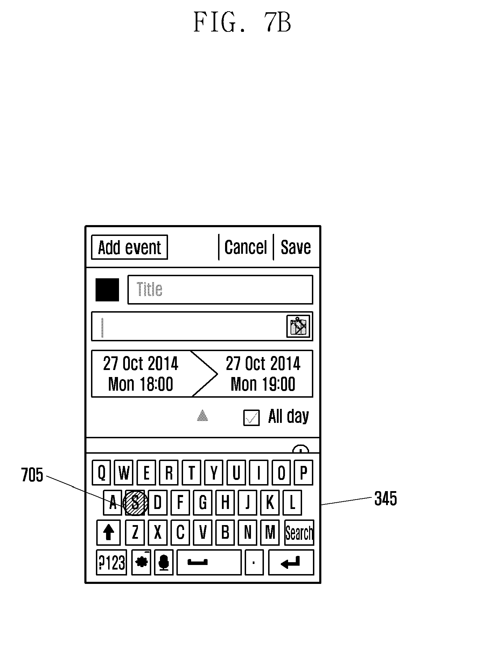

According to another embodiment of FIG. 5, with reference to FIGS. 7A to 7D, the controller 140 may display the schedule setting screen including first time zone information "(GMT -07:00) Pacific Time" 703 as illustrated in FIG. 7A. The controller 140 may detect a touch input 701 in the location information input area 303 on the schedule setting screen (in FIG. 7A) displaying the first time zone information 703. In response to the touch input 701, the controller 140 may display the keypad 345 as illustrated in FIG. 7B. The controller 140 may input location information into the location information input area 303 by using the keypad 345. More specifically, the controller 140 may detect a touch input 705 on "S" of the keypad 345.

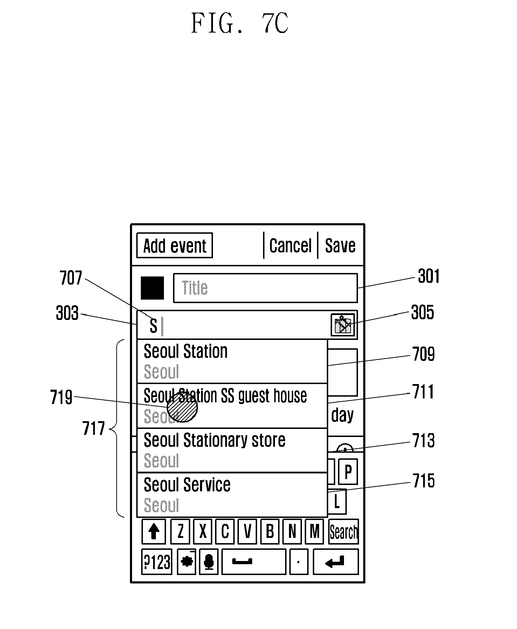

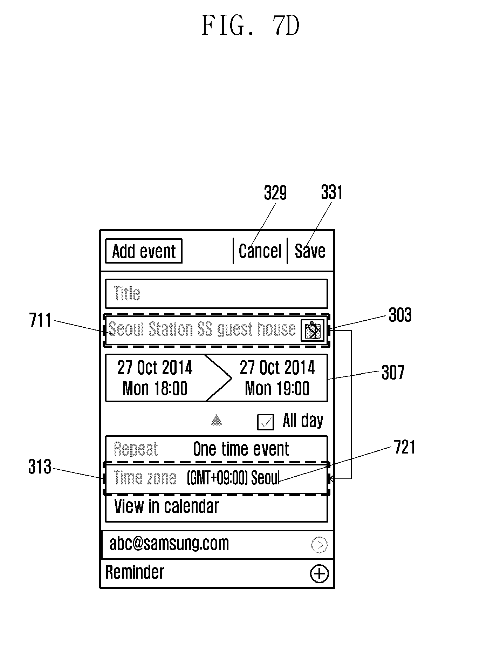

In response to the touch input 705 on "S", the controller 140 may display "S" 707 in the location information input area 303 as illustrated in FIG. 7C. The controller 140 may extract location information including "S" through the predictive text and display recommended location information 717 including information 709, 711, 713, and 715. When a touch input 719 of "Seoul Station SS guest house" 711 among the recommended location information 717 is detected, the controller 140 may acquire second time zone information related to "Seoul Station SS guest house" 711. The second time zone information may be "(GMT+09:00) Seoul". Further, the controller 140 may determine whether the first time zone information and the second time zone information match each other. According to an embodiment of the present disclosure, it may be identified that the first time zone information "(GMT-07:00) Pacific Time" and the second time zone information "(GMT+09:00) Seoul" do not match each other. Since the first time zone information and the second time zone information do match each other, the controller 140 may display "Seoul Station SS guest house" 711 in the location information input area 303 and display the acquired second time zone information "(GMT+09:00) Seoul" 721 in the standard time zone input area 313 as illustrated in FIG. 7D.

That is, referring to FIGS. 5 to 7D, the controller 140 may receive an input of location information on the schedule setting screen displaying the first time zone information in the standard time zone input area 313, acquire the second time zone information related to the input location information, and switch the first time zone information displayed in the standard time zone input area 313 to the acquired second time zone information and display the second time zone information when the first time zone information and the second time zone information do not match each other.

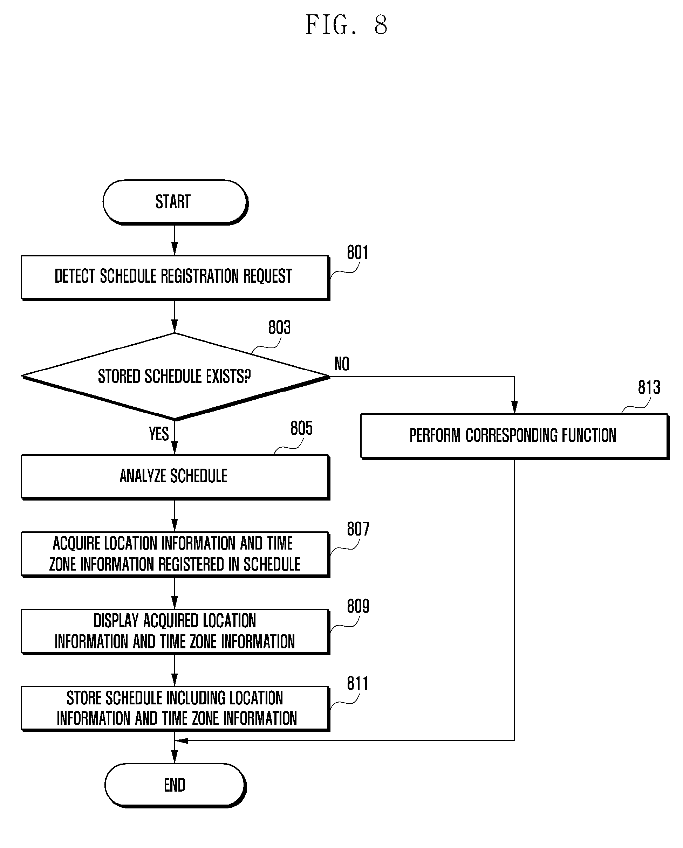

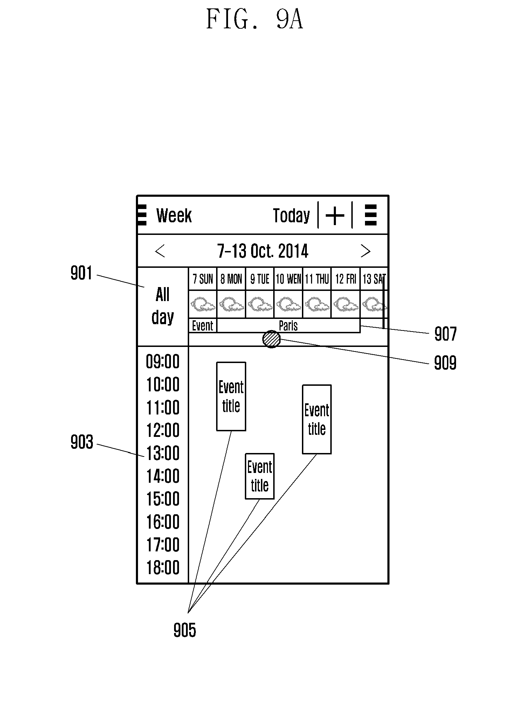

FIG. 8 is a flowchart illustrating a time zone setting method using location information according to an embodiment of the present disclosure. Further, FIGS. 9A to 10C illustrate a time zone setting method using location information according to various embodiments of the present disclosure.

FIGS. 8 to 10C illustrate a flowchart and views describing a method of, when a new schedule is added to the stored schedule in a state, (in the illustrated cases the stored schedule is set in units of days: the stored schedule may, for example, be set for a period from one day to seven days successively), acquiring and displaying location information and time zone information based on the stored schedule.

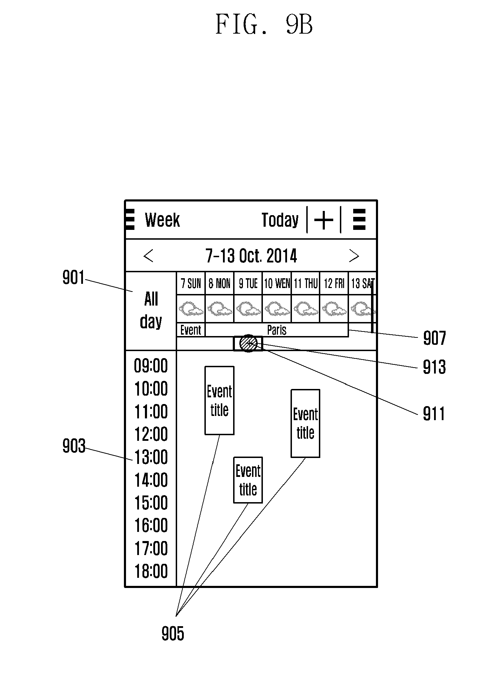

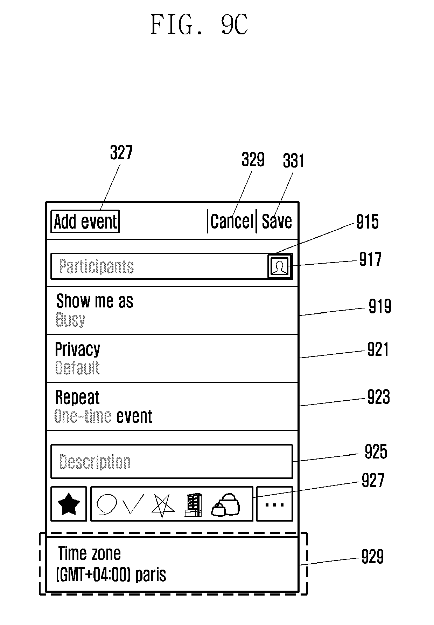

Referring to FIG. 8, a flowchart illustrating a time zone setting method is illustrated, such that according to the time zone setting method the controller 140, as illustrated in FIG. 1, may detect a schedule registration request in operation 801. For example, the controller 140 may display the schedule screen for a week at a time as illustrated in FIG. 9A. On the schedule screen, a Paris schedule from the 8^{th} (Monday) to the 12^{th} (Friday) may be set as indicated by reference numeral 907. At this time, the controller 140 may detect a touch input 909 on the schedule on the 9^{th} (Tuesday). The controller 140 may display a plus (+) shape 911 as illustrated in FIG. 9B in response to the touch input 909 detected on the schedule on the 9^{th} (Tuesday). When a touch input 913 is detected on the plus (+) shape 911, the controller 140 may display the schedule setting screen as illustrated in FIG. 9C. According to an embodiment of the present disclosure, when the touch input is detected on the plus (+) shape 911, the controller 140 may determine the touch input as a schedule registration request input.

The controller 140 may determine whether a stored schedule exists in operation 803. The controller 140 may analyze the context of the schedule to be registered and determine whether there is an already added schedule in the same schedule application or there is an added schedule in the same time zone within 24 hours before and after the schedule. The controller 140 may determine whether there is a stored schedule in a predetermined interval including the schedule to be registered or before and after the schedule to be registered. For example, as illustrated in FIGS. 9A and 9B, it may be identified that successive schedules 907 set for all day 901 on the schedule screen in the unit of weeks and schedules 905 set in the unit of hours 903 are stored.

When the stored schedule exists, the controller 140 may analyze the schedule in operation 805. The controller 140 may acquire location information and time zone information set to the stored schedule in operation 807. For example, as illustrated in FIGS. 9A and 9B, location information of the successive schedules 907 for all day from the 8^{th} (Monday) to the 12^{th} (Friday) corresponds to Paris, and time zone information related to Paris may be set. When a new schedule is added to the stored predetermined schedules (that is, the schedules in Paris from the 8^{th} to the 12^{th}) (that is, the new schedule is added to the 9^{th}), the controller 140 may determine that the location information corresponds to Paris based on the successive schedules 907 and automatically acquire the time zone information related to Paris.

The controller 140 may display the acquired location information and time zone information in operation 809. For example, the controller 140 may display the time zone information of Paris acquired from the successive schedules 907 in the standard time zone input area 929 as illustrated in FIG. 9C. The screen illustrated in FIG. 9C may be a screen including the schedule addition tab 327, the cancel tab 329, the save tab 331, a participant input area 915, contacts 917, a state input area 919, a privacy input area 921, a repeat input area 923, a description input area 925, an emoticon selection area 927, and the standard time zone input area 929. Although it is assumed that only the standard time zone 929 is input in an embodiment of the present disclosure, the present disclosure is not limited thereto and an input in another input area may be detected.

The controller 140 may store the schedule including the location information and the time zone information in operation 811. For example, when a touch input is detected on the save tab 331 in FIG. 9C, the controller 140 may store the schedule including time zone information related to the location information of Paris. The present disclosure is not limited thereto, and information input into an input area such as a schedule name may be also stored.

When the stored schedule does not exist in operation 803, the controller 140 may perform a corresponding function in operation 813. For example, the controller 140 may perform the operation of FIG. 2 or FIG. 5.

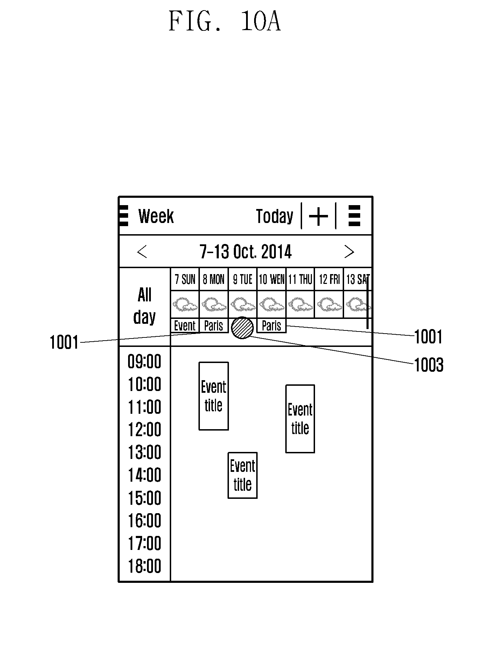

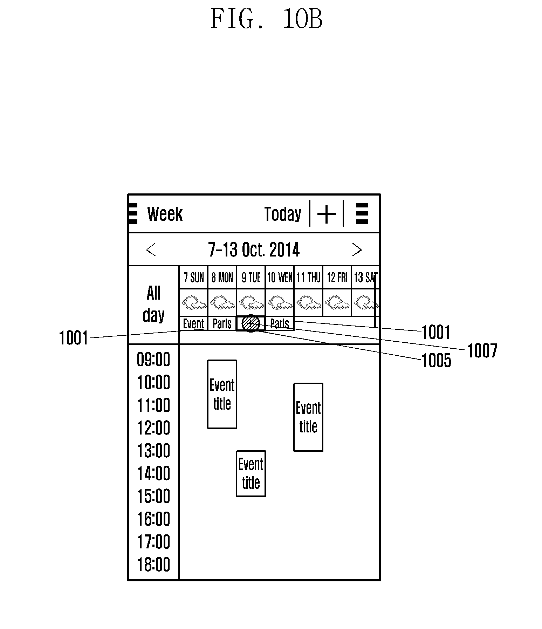

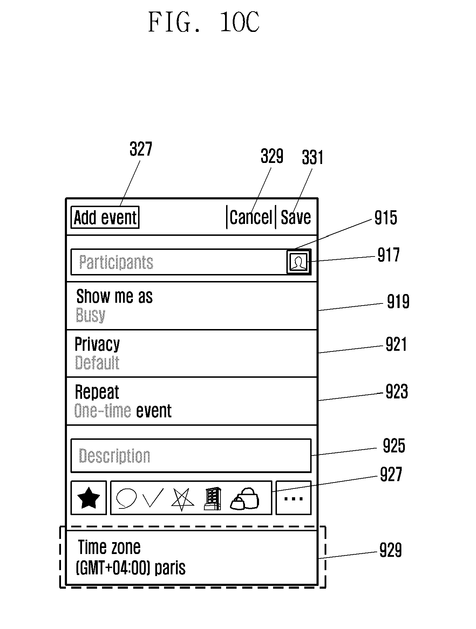

According to another embodiment of FIG. 8 with reference to FIGS. 10A to 10C, Paris schedules are set on the 8^{th} (Monday) and 10^{th} (Wednesday) as indicated by reference numeral 1001 in the week schedules as illustrated in FIG. 10A (regarding FIGS. 10A to 10C, since the schedule setting screen has been described in FIGS. 9A to 9C, redundant descriptions thereof will be omitted). The controller 140 may detect a touch input 1003 in the schedule on the 9^{th} (Tuesday) between the 8^{th} (Monday) and the 10^{th} (Wednesday). In response to the touch input 1003, the controller 140 may display a plus (+) shape 1005 on the schedule of the 9^{th} (Tuesday) as illustrated in FIG. 10B. The controller 140 may detect a touch input 1007 on the plus (+) shape 1005. When the touch input is detected, the controller 140 may determine that the touch input corresponds to a schedule registration request and analyze the schedules before and after the 9^{th} (Tuesday) (that is, schedules on the 8^{th} (Monday) and the 10^{th} (Wednesday)). As described above, the schedules before and after the 9^{th} (Tuesday) correspond to the schedules on the 8^{th} (Monday) and the 10^{th} (Wednesday) in Paris. The controller 140 may determine that location information of the schedule on the 9^{th} (Tuesday) corresponds to Paris based on the schedules before and after the schedule on the 9^{th} (Tuesday). When the touch input 1007 is detected on the plus (+) shape 1005, the controller 140 may display a schedule setting screen of the 9^{th} (Tuesday) as illustrated in FIG. 10C and display the location information of Paris and time zone information "(GMT+04:00) Paris" of Paris as indicated by reference numeral 929.

That is, referring to FIGS. 8 to 10C, when the schedule registration request is detected in a stored predetermined interval, the controller 140 may analyze schedule information including the registered schedule or schedules before and after the registered schedule based on the pre-stored schedules, acquire location information and time zone information of the pre-stored schedules, and display the location information and the time zone information on a predetermined screen. The controller 140 may determine that the user is located in Paris based on the location information set as Paris and automatically set time zone information without a separate location information input.

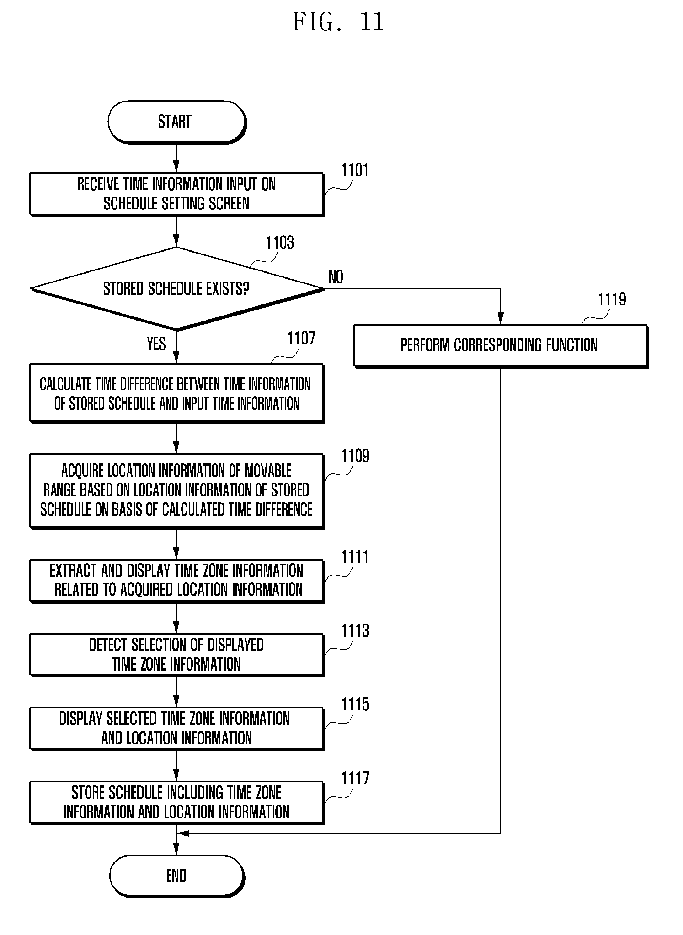

FIG. 11 is a flowchart illustrating a time zone setting method using location information according to an embodiment of the present disclosure.

Referring to FIG. 11, when a new schedule event is set within one hour or two hours, say, of the times of the stored schedule event (the stored event being stored in units of hours, for example), a time zone (close to the time zone of the stored schedule event) may be recommended based on a time difference between the new schedule and the stored schedule.

Referring to FIG. 11, a flowchart illustrating a time zone setting method is illustrated, such that according to the time zone setting method the controller 140, as illustrated in FIG. 1, may receive a time information input on a schedule setting screen in operation 1101.

The controller 140 may determine whether a stored schedule exists in operation 1103. The stored schedule may refer to a schedule close to the input time information. When the stored schedule does not exist, the controller 140 may perform a corresponding function in operation 1119. When the stored schedule exists, the controller 140 may calculate a time difference between time information of the stored schedule and the input time information in operation 1107.

The controller 140 may acquire location information within a movable range based on the location information of the stored schedule based on the calculated time difference in operation 1109. The controller 140 may automatically extract a time zone of the location information according to the time difference between the time information of the close schedule and the input time information. For example, when the time difference between the time information of the stored schedule and the input time information corresponds to two hours, the controller 140 may acquire location information on a location in a movable location within two hours.

The controller 140 may extract and display time zone information related to the acquired location information in operation 1111. When the schedule is an additional schedule before or after the time information of the pre-input schedule, the controller 140 may determine the schedule corresponds to a movement within a range of the pre-input time zone, calculate a neighboring movable distance, and recommend a minimum time zone range. That is, when setting a time zone, the controller 140 may recommend a time zone of a movable distance within, for example, one hour or two hours rather than an entire list. In other words, according to the present disclosure, an electronic device may provide the user with a minimum selection path by calculating a movement distance and recommending a closest time zone.

When the selection of the displayed time zone information is detected in operation 1113, the controller 140 may display the selected time zone information and location information in operation 1115. The controller 140 may store the schedule including the time zone information and the position information in operation 1117.

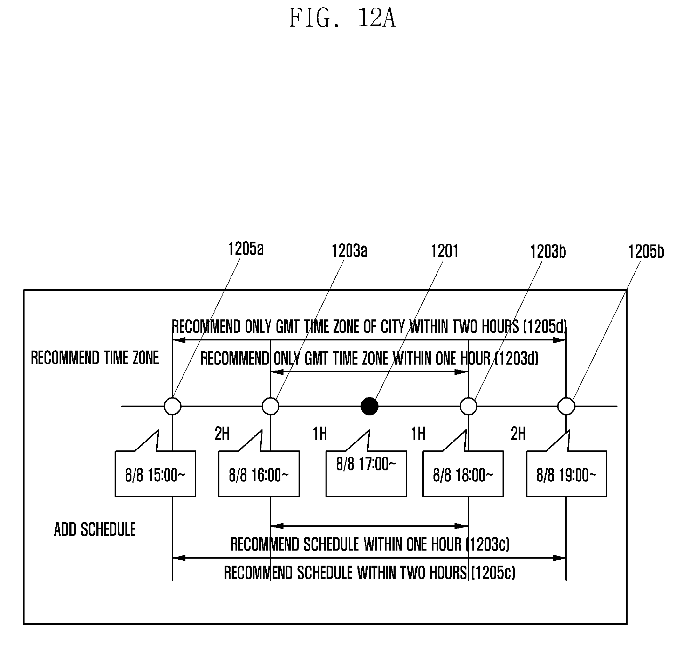

FIGS. 12A to 12C illustrate a time zone setting method using location information according to various embodiments of the present disclosure. Regarding FIGS. 12A to 12C, since the schedule setting screen has been described in FIGS. 3A to 3D and 9A to 9C, redundant descriptions thereof will be omitted.

Referring to FIG. 12A, a schedule is illustrated, wherein a Paris schedule at 17:00 on August 8 is pre-stored as indicated by reference numeral 1201.

As indicated by reference numeral 1203c, the controller 140, as illustrated in FIG. 1, may set a schedule event at 16:00 on August 8 1203a one hour before the Paris schedule 1201 at 17:00 on August 8 and/or a schedule event at 18:00 on August 8 1203b one hour after the Paris schedule 1201 at 17:00 on August 8. Alternatively, as indicated by reference numeral 1205c, the controller 140 may set a schedule event at 15:00 on August 8 1205a two hours before the Paris schedule 1201 at 17:00 on August 8 and/or a schedule event at 19:00 on August 8 1205b two hours after the Paris schedule 1201 at 17:00 on August 8.

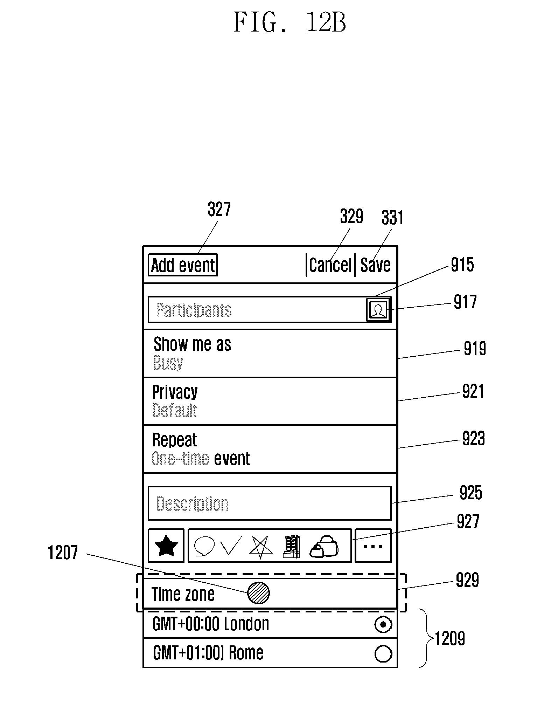

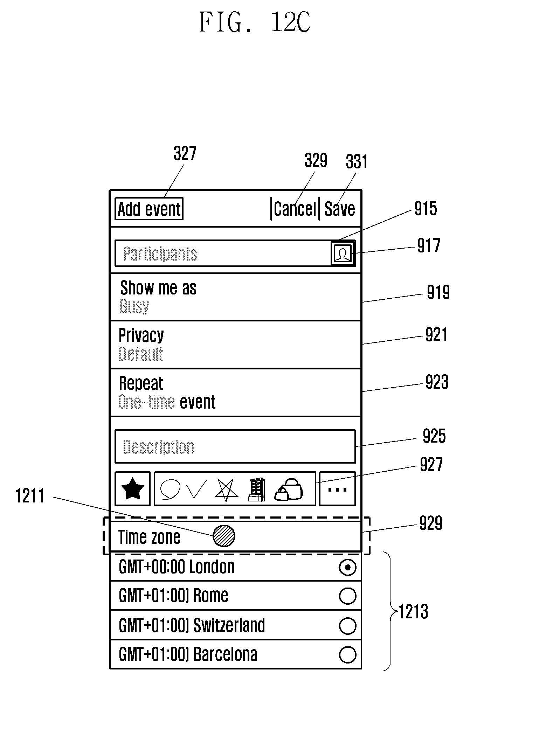

The controller 140 may detect a touch input 1207, as illustrated in FIG. 12B, in the standard time zone input area on the schedule setting screen to register the schedules 1203a and/or 1203b. In response to the touch input 1207, the controller 140 may extract GMT time zones "(GMT+00:00) London" and "(GMT+01:00) Rome" of locations corresponding to a movable distance within one hour as indicated by reference numeral 1209 of FIG. 12B and display (i.e. recommend) the extracted GMT time zones as indicated by reference numeral 1203d of FIG. 12A. Alternatively, the controller 140 may detect a touch input 1211 in the standard time zone input area 929, as illustrated in FIG. 12C, on the schedule setting screen to register the schedules 1205a and/or 1205b. In response to the touch input 1211, the controller 140 may extract GMT time zones "(GMT+00:00) London", "(GMT+01:00) Rome", "(GMT+01:00) Switzerland", and "(GMT+01:00) Barcelona" of locations corresponding to a movable distance within two hours as indicated by reference numeral 1213 of FIG. 12C and display (i.e. recommend) the extracted GMT time zones as indicated by reference numeral 1205d of FIG. 12A. The locations of the movable distance are not limited thereto.

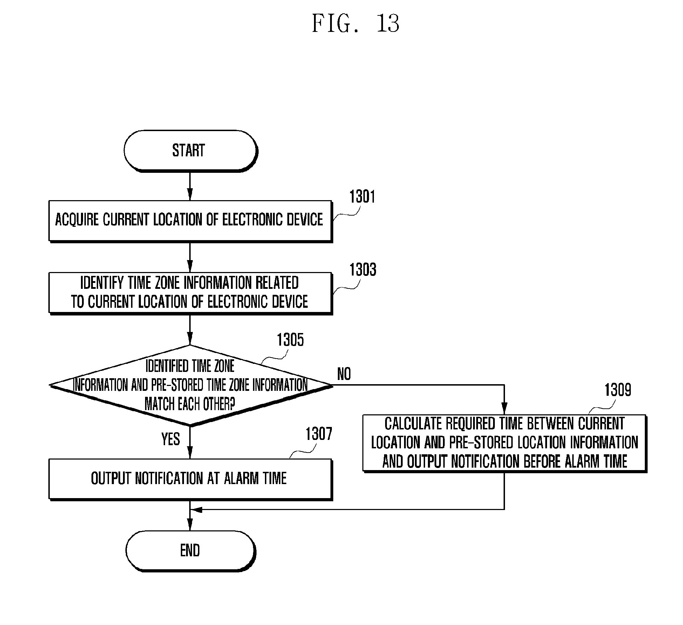

FIG. 13 is a flowchart illustrating a method of providing a notification to a user by using location information according to an embodiment of the present disclosure.

Referring to FIG. 13, a flowchart illustrating a method of providing a notification to a user is illustrated, such that according to the method the controller 140, as illustrated in FIG. 1, may acquire a current location of the electronic device in operation 1301.

The controller 140 may identify time zone information related to the current location of the electronic device in operation 1303.

The controller 140 may determine whether the identified time zone information and preset time zone information match each other in operation 1305. The preset time zone information may be pre-stored time zone information.

When the identified time zone information and the pre-stored time zone information match each other, the controller 140 may output a notification at an alarm time set to the pre-stored schedule in operation 1307. In other words, when the identified time zone information and time zone information of the pre-stored schedule match each other, the controller 140 may determine that the current location of the electronic device is the same as a current location of the pre-stored schedule. According to an embodiment of the present disclosure, the controller 140 may notify the user of the stored schedule at the set alarm time in at least one method of displaying a popup window on the display unit 131, as illustrated in FIG. 1, and giving a vibration or sound.

In contrast, when the identified time zone information and the time zone information of the pre-stored schedule do not match each other, the controller 140 may calculate the time taken to travel between the current location and the location information of the pre-stored schedule and output a notification before the alarm time set to the pre-stored schedule based on the required time in operation 1309. In other words, when the identified time zone information and the time zone information of the pre-stored schedule do not match each other, the controller 140 may determine that the current location of the electronic device is not the same as the current location of the pre-stored schedule. Accordingly, the controller 140 may calculate the time that will be taken between the current location and the location information of the pre-stored schedule. Further, the controller 140 may output the notification before the required time in consideration of the calculated required travel time.

Various aspects of the present disclosure can also be embodied as computer readable code on a transitory or non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more transitory or non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the scope of the present disclosure as defined by the appended claims.

Features, integers or characteristics described in conjunction with a particular aspect, embodiment or example of the invention are to be understood to be applicable to any other aspect, embodiment or example described herein unless incompatible therewith.

It will also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A method of setting a time zone based on location information, the method comprising:
receiving, by an electronic device including a processor, an input of location information on a schedule setting screen of the electronic device (operation 203; 503);
acquiring and displaying time zone information related to the input location information (operation 205; 505); and
storing a schedule including the location information and the time zone information (operation 209; 511, 513).

2. The method of claim 1, further comprising:
displaying preset time zone information before the receiving of the input of the location information (operation 201; 501),
wherein the acquiring and displaying of the time zone information comprises switching the preset time zone information to the acquired time zone information and displaying the acquired time zone information.

3. The method of claim 1, further comprising:
acquiring a current location of the electronic device (operation 1301);
identifying time zone information related to the current location (operation 1303);
determining whether the identified time zone information and the stored time zone information match each other (operation 1305); and
outputting a notification at an alarm time set to the stored schedule when the identified time zone information and the stored time zone information match each other (operation 1307).

4. The method of claim 3, further comprising, when the identified time zone information and the stored time zone information do not match each other:
calculating a time required to reach a place corresponding to the stored location information from the current location; and
outputting the notification before the alarm time set to the stored schedule based on the calculated time (operation 1309).

5. The method of claim 1, wherein the receiving of the input of the location information comprises:
receiving the input of the location information through at least one of a map, a location information input in a location information input area, and an input for selecting location information stored based on a previous input.

6. A method of setting a time zone based on location information, the method comprising:
determining, by an electronic device including a processor, whether a schedule related to a schedule to be registered is stored (operation 803), when a schedule registration request is detected (operation 801) on a schedule setting screen of the electronic device;
acquiring and displaying location information and time zone information of the related schedule, when the related schedule is stored (operations 807,809); and
storing the schedule to be registered including the location information and the time zone information (operation 811).

7. The method of claim 6,
wherein the schedule to be registered includes a schedule in units of at least one of weeks, days, and hours, and
wherein the related schedule includes at least one of a schedule including the schedule to be registered, a schedule before the schedule to be registered, a schedule after the schedule to be registered, and a schedule at substantially the same time as the schedule to be registered.

8. The method of claim 7, wherein, when a schedule registration request that for registration of a schedule in units of hours is detected and when a schedule at substantially the same time as the schedule to be registered is stored, the operation of acquiring and displaying of the location information and the time zone information comprises:
calculating a time difference between time information of the stored schedule and time information of the schedule to be registered;
acquiring location information of a movable range from the location information of the stored close schedule based on the calculated time difference;
displaying recommended time zone information related to the acquired location information of the movable range; and
in response to an input for selecting at least one piece of the displayed recommended time zone information, displaying the selected at least one piece of the displayed time zone information and the location information.

9. An electronic device comprising:
a display unit (131) configured to display a schedule setting screen including location information and time zone information; and
a controller (140) including a processor configured to:
acquire and display, when an input of the location information is received on the schedule setting screen, the time zone information related to the input location information, and
store a schedule including the location information and the time zone information.

10. The electronic device of claim 9, wherein the processor of the controller is further configured to:
acquire a current location of the electronic device;
identify time zone information related to the current location; and
when the identified time zone information and the stored time zone information match each other, output a notification at an alarm time set to the stored schedule.

11. The electronic device of claim 10, wherein, when the identified time zone information and the stored time zone information do not match each other, the processor of the controller is further configured to:
calculate a time required to reach a place corresponding to the stored location information from the current location; and
output the notification before the alarm time set to the stored schedule based on the calculated time.

12. An electronic device comprising:
a display unit (131) configured to display a schedule setting screen including location information and time zone information; and
a controller (140) including a processor configured to:
determine whether a schedule related to a schedule to be registered is stored, when a schedule registration request is detected on the schedule setting screen,
acquire and display location information and time zone information of the related schedule, when the related schedule is stored, and
store the schedule to be registered including the location information and the time zone information.

13. The electronic device of claim 12, wherein the processor of the controller is further configured to:
detect the schedule registration request for registration of a schedule in units of at least one of weeks, days, and hours on the schedule setting screen; and
determine whether at least one related schedule is stored, where the stored related schedule is a schedule including the schedule to be registered, a schedule before the schedule to be registered, a schedule after the schedule to be registered, and a schedule at substantially the same time as the schedule to be registered.

14. The electronic device of claim 13, wherein the processor of the controller is further configured to:
detect the schedule registration request for registration of a schedule in units of hours;
calculate, when a schedule at substantially the same time as the schedule to be registered is stored, a time difference between time information of the stored schedule and time information of the schedule to be registered;
acquire location information of a movable range from the location information of the stored close schedule based on the calculated time difference;
display recommended time zone information related to the acquired location information of the movable range; and
display, in response to an input for selecting at least one piece of the displayed recommended time zone information, the selected at least one piece of the displayed time zone information and the location information.

15. A computer-readable storage medium storing instructions that, when executed, cause at least one processor to perform the method of any one of claims 1 to 8.

16. A method of setting a time zone based on location information, the method comprising:
displaying a schedule registration screen including location information;
receiving a first input;
receiving a location information related to a schedule item, when the first input corresponds to a time information related to the schedule item, wherein the first input as a time information of a current location is stored upon completing a schedule registration; and
receiving a time information related to a schedule item after the first input, when the first input corresponds to a location information related to the schedule item, wherein the received time information as a time information of the inputted location is stored upon completing a schedule registration.

17. An electronic device comprising:
a display unit (131) configured to display a schedule registration screen including location information; and
a controller (140) including a processor configured to:
receive a first input; and
in response to the first input:
when the first input corresponds to a time information related to a schedule item, receive a location information related to the schedule item, wherein the first input as a time information of a current location is stored upon completing a schedule registration; and
when the first input corresponds to a location information related to a schedule item, receive a time information related to the schedule item after the first input, wherein the received time information as a time information of the inputted location is stored upon completing a schedule registration.
